# EUROPEAN PATENT APPLICATION

(11) **EP 4 369 279 A1**
(43) Date of publication of application: **15.05.2024**
(21) Application number: 22837337.9
(22) Date of filing: 11.05.2022
(51) Int. Cl.: G06Q 50/06, G06Q 50/10

(54) **ENERGY RESOURCE CONTROL SYSTEM, ENERGY RESOURCE CONTROL METHOD, AND PROGRAM**

(30) Priority: 05.07.2021 JP 2021111823
(71) Applicant: Panasonic Intellectual Property Management Co., Ltd., Kadoma-shi, Osaka 571-0057 (JP)
(72) Inventor: WATANABE, Kenichi, 571-0057 Osaka (JP); UENO, Takamasa, 571-0057 Osaka (JP); OKAICHI, Atsuo, 571-0057 Osaka (JP)
(74) Representative: Appelt, Christian W.
(86) International application number: PCT/JP2022/019912
(87) International publication number: WO 2023/281916

(57) **Abstract**

The problem to be overcome by the present disclosure is to perform resource control for energy resources more accurately. An energy resource control system (1) according to the present disclosure includes a data acquirer (101), a display controller (102), and a generator (103). The data acquirer (101) is configured to acquire measuring data measured in a facility. The display controller (102) is configured to control a display unit (13) to display data about the resource control. The generator (103) is configured to generate a control command for a control target energy resource that is a target of the resource control. The display controller (102) is further configured to allow the display unit (13) to display an energy resource input screen. The generator (103) is configured to generate the control command based on: the control target energy resource according to an input received on the energy resource input screen; and the measuring data acquired by the data acquirer (101).

## Description

### Technical Field

The present disclosure generally relates to energy resource control systems, energy resource control methods, and programs. More particularly, the present disclosure relates to an energy resource control system configured to perform resource control for energy resources to provide a power service, an energy resource control method, and a program.

### Background Art

Conventionally, a system is known, which performs resource control for an energy resource to provide a power service (for example, refer to Patent Literature 1).

Patent Literature 1 discloses a power control device, which can increase the chance of allowing a resource (energy resource) to carry out a demand response.

### Citation List

### Patent Literature

Patent Literature 1: JP 2016-171710 A

### Summary of Invention

There has been a demand to more accurately perform resource control for energy resources.

It is therefore an object of the present disclosure to provide an energy resource control system, an energy resource control method and a program, all of which can perform resource control for energy resources more accurately.

An energy resource control system according to an aspect of the present disclosure is configured to perform resource control for energy resources to provide a power service. The energy resource control system includes a data acquirer, a display controller, and a generator. The data acquirer is configured to acquire measuring data as power information measured in a facility. The display controller is configured to control a display unit to display data about the resource control. The generator is configured to generate a control command for a control target energy resource that is a target of the resource control. The display controller is further configured to allow the display unit to display an energy resource input screen for receiving: an input of a selection condition for the energy resources: and an input of setting, to the control target energy resource, at least one energy resource, which satisfies the selection condition, of the energy resources. The generator is configured to generate the control command based on: the control target energy resource according to the input of setting, received on the energy resource input screen; and the measuring data acquired by the data acquirer.

An energy resource control system according to an aspect of the present disclosure is configured to perform resource control for energy resources to provide a power service. The energy resource control system includes a data acquirer, a display controller, and a generator. The data acquirer is configured to acquire measuring data as power information measured in a facility. The display controller is configured to control a display unit to display data about the resource control. The generator is configured to generate a control command for a control target energy resource that is a target of the resource control. The display controller is further configured to allow the display unit to display a parameter input screen for receiving an input of a parameter relating to the power service. The generator is configured to generate the control command based on: the parameter received on the parameter input screen; and the measuring data acquired by the data acquirer.

An energy resource control method according to an aspect of the present disclosure is to be applied to an energy resource control system configured to perform resource control for energy resources to provide a power service. The energy resource control method includes an acquisition step, a display control step, and a generation step. The acquisition step includes acquiring measuring data as power information measured in a facility. The display control step includes controlling a display unit to display data about the resource control. The generation step includes generating a control command for a control target energy resource that is a target of the resource control. The display control step further includes allowing the display unit to display an energy resource input screen for receiving: an input of a selection condition for the energy resources: and an input of setting, to the control target energy resource, at least one energy resource, which satisfies the selection condition, of the energy resources. The generation step includes generating the control command based on: the control target energy resource according to the input of setting, received on the energy resource input screen; and the measuring data acquired in the acquisition step.

An energy resource control method according to an aspect of the present disclosure is to be applied to an energy resource control system configured to perform resource control for energy resources to provide a power service. The energy resource control method includes an acquisition step, a display control step, and a generation step. The acquisition step includes acquiring measuring data as power information measured in a facility. The display control step includes controlling a display unit to display data about the resource control. The generation step includes generating a control command for a control target energy resource that is a target of the resource control. The display control step further including allowing the display unit to display a parameter input screen for receiving an input of a parameter relating to the power service. The generation step including generating the control command based on: the parameter received on the parameter input screen; and the measuring data acquired in the acquisition step.

A program according to an aspect of the present disclosure is designed to cause a computer system to perform any one of the energy resource control methods described above.

### Brief Description of Drawings

FIG. 1 is a system diagram showing an application example of an energy resource control system according to an exemplary embodiment;
FIG. 2 is a block diagram showing a configuration of the energy resource control system;
FIG. 3 is a flowchart showing how the energy resource control system operates;
FIG. 4 is a sequence diagram showing how the energy resource control system operates;
FIG. 5 is an explanatory diagram for explaining a configuration of a parameter input screen displayed by the energy resource control system;
FIG. 6 is an explanatory diagram for explaining a configuration of an energy resource input screen displayed by the energy resource control system;
FIG. 7 is an explanatory diagram for explaining a configuration of a result confirmation screen displayed by the energy resource control system;
FIG. 8 is an explanatory diagram for explaining a configuration of a data download screen displayed by the energy resource control system;
FIG. 9 is an explanatory diagram for explaining a configuration of a DR event result information screen displayed by the energy resource control system; and
FIG. 10 is an explanatory diagram for explaining a configuration of a peak cut screen displayed by the energy resource control system.

### Description of Embodiments

Note that each of the embodiment and variations described in the following is only an exemplary one of various configurations of the present disclosure and should not be construed as limiting. Even other than the embodiment and variations described in the following, various modifications may be made depending on a design choice or any other factor, as long as they do not deviate from the technical idea according to the present disclosure.

### (Embodiment)

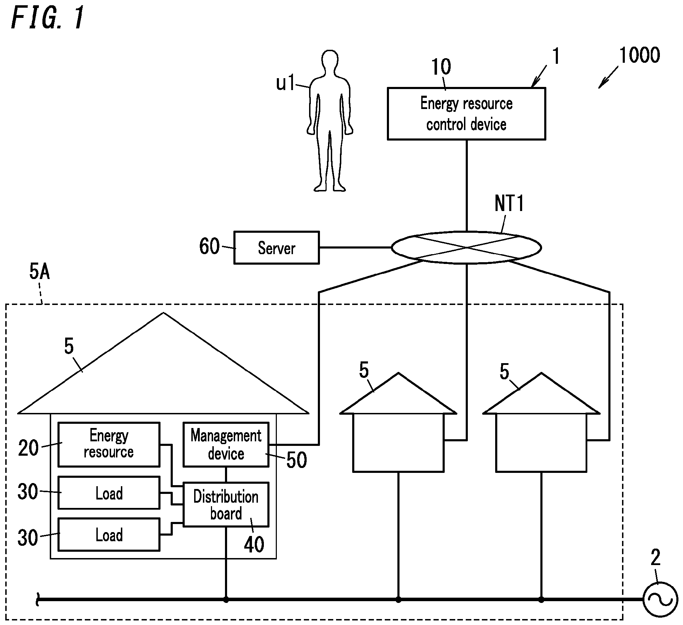

Hereinafter, an energy resource control system according to this embodiment will be described with reference to FIGS. 1 to 10.

### (1) Overview

An energy resource control device 10, which is implemented as an energy resource control system 1 according to this embodiment, is configured to perform resource control for energy resources to provide a power service. The energy resource control device 10 is included in a power control system 1000. The power control system 1000 includes not only the energy resource control device 10 but also at least one energy resource 20 (one in the illustrated example) and a management device 50, which are installed in each of a plurality of facilities 5 (three in the illustrated example).

As shown in FIG. 1, the energy resource control device 10 according to this embodiment performs the resource control for the energy resource(s) 20 installed in each of the plurality of facilities 5. The energy resources 20 may include: a power conditioner (Power Conditioning System: PCS) electrically connected to a distribution board 40; and equipment electrically connected to the distribution board 40 via the PCS. The energy resources 20 may also include a load to be controlled. Examples of the equipment of the energy resources 20 include a photovoltaic power generation system, a storage battery, a heat pump water heater, a fuel cell and a power conditioner for electric vehicle.

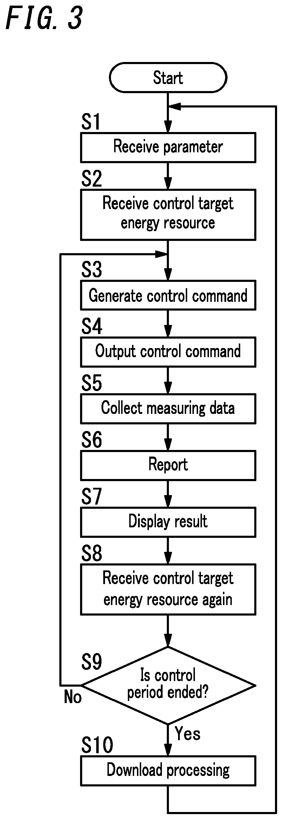

As shown in FIG. 1, each of the plurality of facilities 5 includes the energy resource 20, a plurality of loads 30 (two in the illustrated example), the distribution board 40, and the management device 50. The facilities 5 according to this embodiment are, for example, detached residences. The "facilities" mentioned herein mean detached residences, buildings, and other facilities, which receive the (electric) power from a power grid and the energy resource. The whole of a campus (such as a college campus) may be one facility, or a single building in the campus may be one facility. The plurality of loads 30 are, for example, electrical apparatuses (such as lighting apparatuses and air conditioners) which are provided in the facility 5 and consume the power. When the electrical apparatuses are set as targets to be controlled, they may correspond to the energy resources 20. The plurality of facilities 5 shown in FIG. 3 are included in one control target area 5A. The control target area 5A is defined as an area where the energy resource 20 can be controlled by the energy resource control device 10. That is to say, the energy resource control device 10 can control the energy resource 20 in each of the plurality of facilities 5 included in the control target area 5A. The control target area 5A may be the district unit of the general transmission and distribution company, or the like.

The distribution board 40 is installed in the facility 5 to distribute AC power supplied from a power grid 2 of the regional energy utility or the like to the plurality of loads 30 provided in the facility 5. The distribution board 40 further distributes (electric) power supplied from the energy resource 20 to the plurality of loads 30 provided in the facility 5. The distribution board 40 may reversely make the power supplied from the energy resource 20 flow to the power grid 2. The main power line of the power grid 2 is provided with a power meter, such as a smart meter, which measures power passing through the main power line. The power meter measures power consumption (i.e., purchased power amount) by measuring the power (hereinafter, referred to as "supplied power") supplied from the power grid 2 to the distribution board 40. The purchased power amount measured by the power meter may be an amount of power obtained by integrating the supplied power over a certain period of time (e.g., every 30 minutes from the hour). The purchased power amount measured by the power meter is supposed to be represented by two patterns. The purchased power amount includes: an amount of power obtained by integrating the supplied power over e.g., every 30 minutes from the hour; and an accumulated amount of the supplied power from e.g., the start of measurement counting. In addition, the power meter measures the consumed power (i.e., purchased power) by measuring the supplied power between the power grid 2 and the distribution board 40.

The power meter also measures the amount of power (i.e., sold power amount) reversely made flow from the energy resource 20 through the distribution board 40. The sold power amount measured by the power meter is supposed to be represented by two patterns. The sold power amount includes: an amount of power obtained by integrating the power reversely made flow over e.g., every 30 minutes from the hour; and an accumulated amount of the power reversely made flow from e.g., the start of measurement counting. The power meter measures the power (i.e., sold power) reversely made flow from the energy resource 20 through the distribution board 40. The forward power flow and the reverse power flow may be measured by a single power meter, or those power flows may be respectively measured by two power meters.

The distribution board 40 includes a measuring device and may measure the power consumption of each load 30 by measuring the power supplied to each load 30 of the facility 5. The measuring device also measures the power received from the energy resource 20 to obtain the amount of power supplied from the energy resource 20 (i.e., an amount of power generated) or the power (power generation). In addition, the measuring device may obtain the purchased power amount and the sold power amount, measured by the power meter. In this embodiment, for example, the measured value (the power consumption and the amount of power generated) of the measuring device includes: an amount of power obtained by integrating the power measured over e.g., every 30 minutes from the hour; and an accumulated amount of the power measured from e.g., the start of measurement counting. Hereinafter, the purchased power amount, purchased power, the sold power amount, the sold power, the power consumption, the consumed power, the amount of power generated, and the generated power, which are measured at each facility 5, may be referred to also as individual purchased power amount, individual purchased power, individual sold power amount, individual sold power, individual power consumption, individual consumed power, individual amount of power generated, and individual generated power, respectively.

The management device 50 is configured to communicate with the energy resource control device 10 via a network NT1 such as the Internet. The management device 50 transmits the measuring data, which is the power information measured by the power meter or the distribution board 40, to the energy resource control device 10 via the network NT1. Specifically, the management device 50 transmits, to the energy resource control device 10, the purchased power amount, the purchased power, the sold power amount, the sold power, the power consumption, the consumed power, the amount of power generated, and the generated power (as the individual purchased power amount, the individual purchased power, the individual sold power amount, the individual sold power, the individual power consumption, the individual consumed power, the individual amount of power generated, and the individual generated power, respectively). The management device 50 acquires, from the energy resource 20, the state of the energy resource 20, the power (the generated power, the consumed power, the charging power, the discharging power, or any other power), and the amount of power (the amount of power generated, the power consumption, the amount of charging power, the amount of discharging power, or any other amount of power), which are measured by the energy resource 20, and transmits them to the energy resource control device 10. The management device 50 receives the control command from the energy resource control device 10 via the network NT1. The control command is generated by the energy resource control device 10 based on the measuring data. The control command represents the control contents for the energy resource 20 of the facility 5. The management device 50 outputs, to the energy resource 20, the control command received from the energy resource control device 10. The management device 50 may directly output, to the energy resource 20, the control command received from the energy resource control device 10 or may recalculate the control command and output it to the energy resource 20. The management device 50 may, for example, output the control command to the PCS of the energy resource 20 via the distribution board 40.

The PCS of the energy resource 20 adjusts the power to be consumed in the facility 5 or any other factor based on the control command received. In this embodiment, the control command represents, for example, the mode of the energy resource 20, the amount of power, the power, the current, etc., which are supplied or consumed by the energy resource 20.

The energy resource control device 10 is configured to communicate with a server 60 via the network NT1. The server 60 may be managed by a transmission and distribution company, a retail electricity provider, an aggregation coordinator, a regional energy utility, or the like. The energy resource control device 10 receives control information about control for the energy resource from the server 60. The control information may include the control command, a demand response (DR) event, and the like. For example, in case of carrying out control of the peak cut, the energy resource control device 10 may control the energy resource without the control command from the server 60.

### (2) Configuration

Herein, the configuration of the energy resource control device 10, as the energy resource control system 1, will be described.

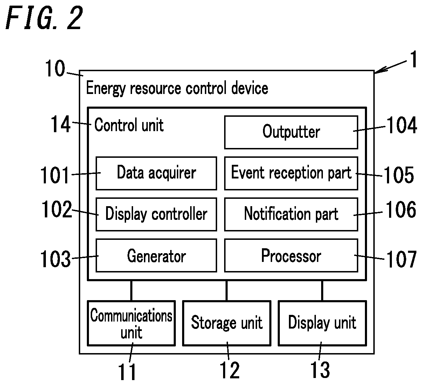

As shown in FIG. 2, the energy resource control device 10 includes a communications unit 11, a storage unit 12, a display unit 13, and a control unit 14. Although described later, the display unit 13 does not necessarily have to be included in the energy resource control device 10.

The energy resource control device 10 is implemented as a server device or any other device and includes a central processing unit (CPU) and a memory. That is to say, the CPU performs the functions of the control unit 14 by executing one or more programs stored in the memory. In this embodiment, the program(s) is/are downloaded via a telecommunications line such as the Internet or distributed after having been stored in a non-transitory storage medium such as a memory card. However, this is only an example and should not be construed as limiting. The program(s) may be stored in advance in the memory of the computer.

The communications unit 11 is a communications interface for communicating with the management device 50. The communications unit 11 is connected to the network NT1 to communicate with the management device 50 and the server 60.

The storage unit 12 includes any one selected from the group consisting of a Read Only Memory (ROM), a Random Access Memory (RAM), an Electrically Erasable Programmable Read Only Memory (EEPROM), and any other memory.

The storage unit 12 stores data received from the management device 50 in a time series for each type of the data.

The storage unit 12 stores therein a parameter(s) relating to the power service. The parameters include a reference value, a controllable amount, and a bid amount. The reference value may be an amount of power (or power) to be consumed by the facility 5 for a DR event period and may be calculated from the measuring data obtained from the facility 5. Examples of the method of calculating the reference value include adoption of the average value of the past measuring data, a predicted value, and adoption of the last value of the measuring data. Alternatively, the reference value may be obtained from the server 60 managed by the transmission and distribution company, the retail electricity provider, the aggregation coordinator, the regional energy utility, or the like. The controllable amount is an amount of power (or power) that can be supplied by the energy resource 20. If the adjustment power of the energy resource 20 is traded in the power market, the controllable amount may correspond to the bid amount. The parameters may include any one of the reference value, the controllable amount and the bid amount. That is to say, the parameter(s) include at least one selected from the group consisting of the reference value, the controllable amount and the bid amount.

The storage unit 12 further stores therein a target value of the peak cut (referred to also as a "peak cut target value"). The storage unit 12 may not only store not only the parameter relating to the power service and the latest value of the peak cut target value, but also all of the change history thereof.

The display unit 13 is a thin display device such as a liquid crystal display or an organic electroluminescence (EL) display. The display unit 13 displays a screen for receiving the input of information for generating the control command. In FIG. 2, the display unit 13 is implemented as a part of the energy resource control device. However, the display unit 13 may be implemented as input devices and/or output devices of one or more client terminals located at a location other than the energy resource control device 10. That is to say, the energy resource control device 10 need not be at the same location as an operator u1.

As shown in FIG. 2, the control unit 14 includes a data acquirer 101, a display controller 102, a generator 103, an outputter 104, an event reception part 105, a notification part 106, and a processor 107.

The data acquirer 101 acquires the measuring data as the power information measured in each facility 5. Specifically, the data acquirer 101 acquires, from each management device 50 via the communications unit 11, the data measured and obtained by the power meter, the distribution panel 400, and the energy resource 20.

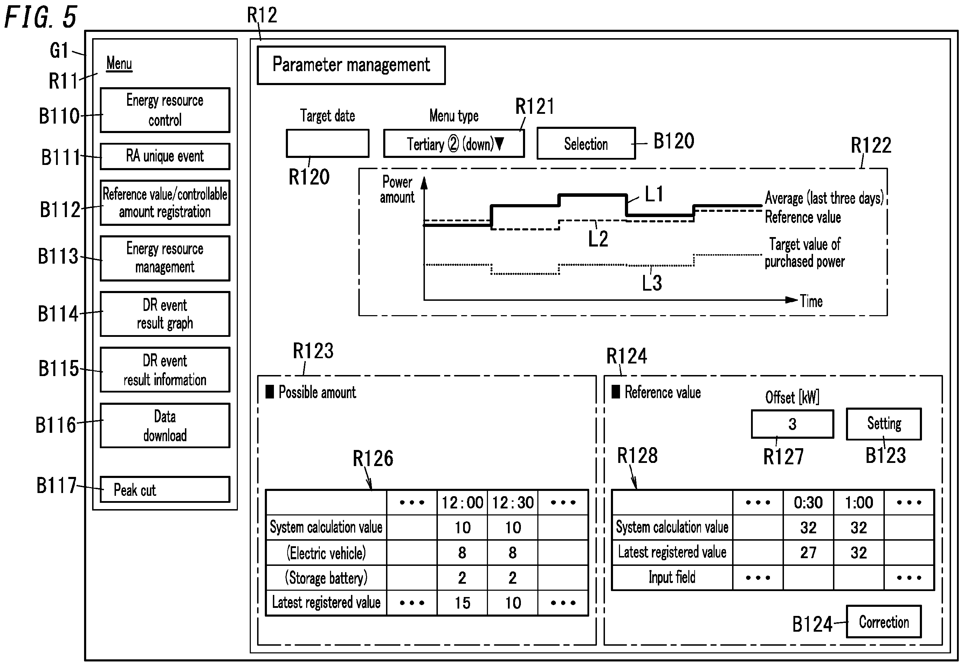

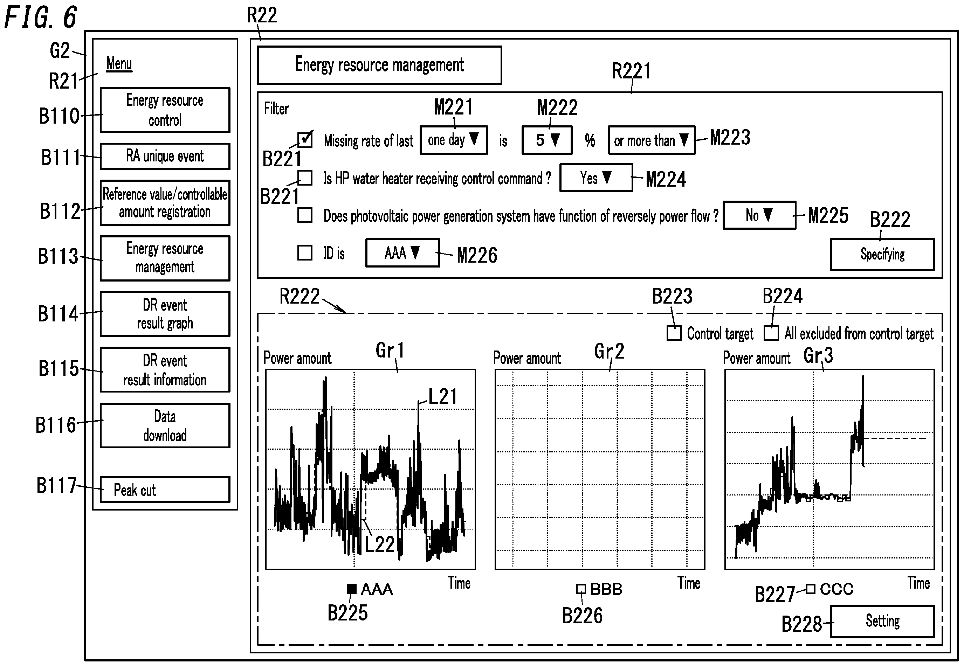

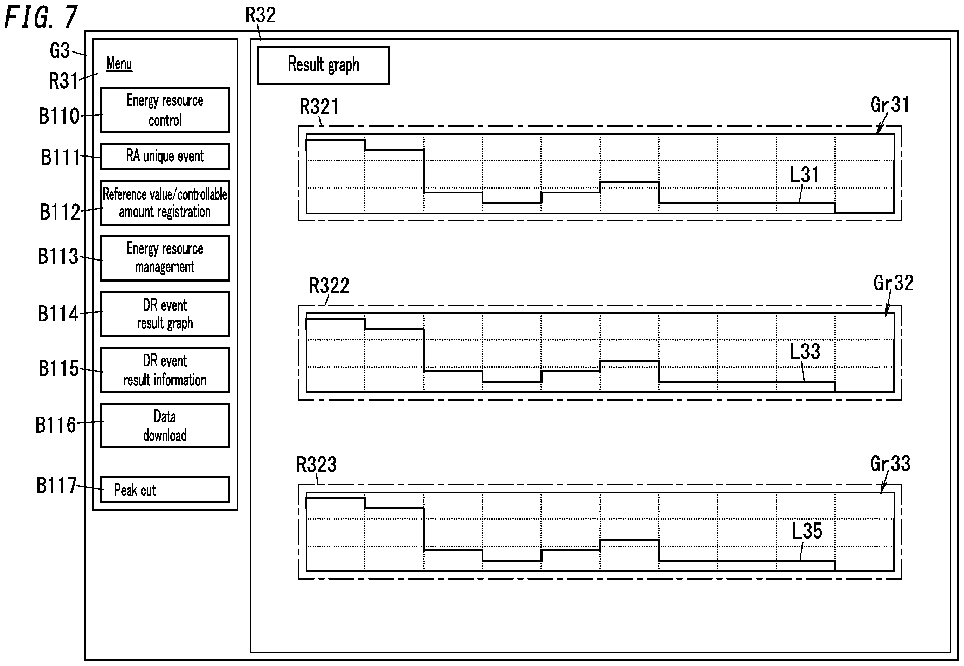

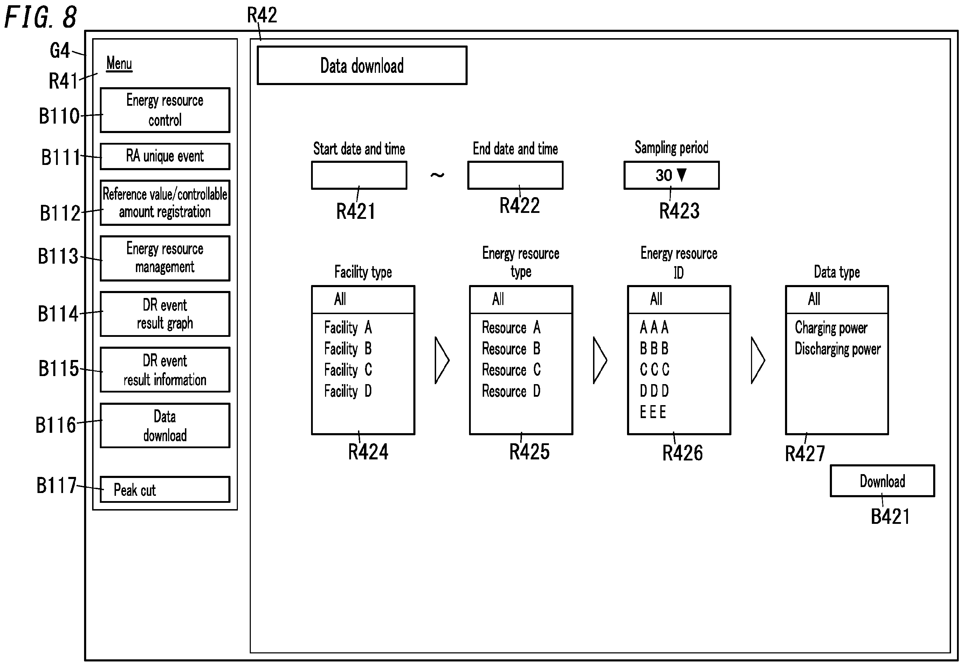

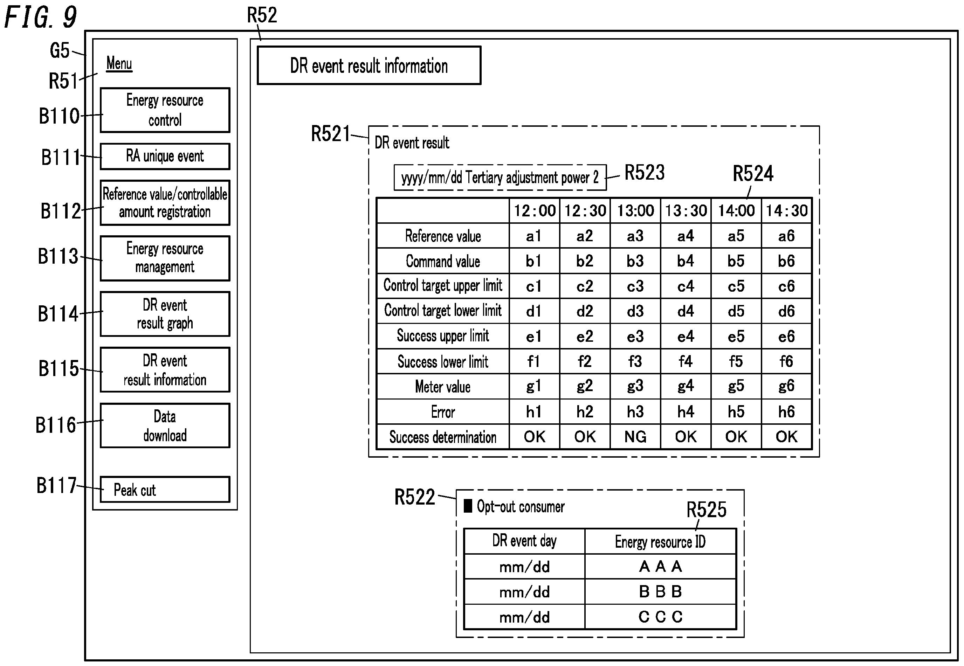

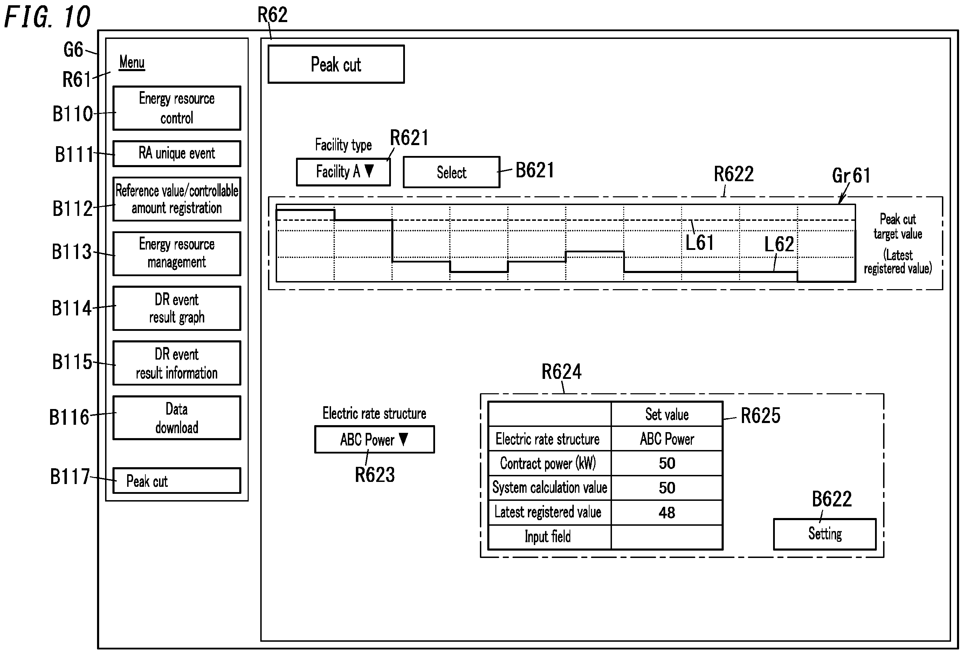

The display controller 102 controls the display unit 13 to display data about the resource control for the energy resource 20. Specifically, the display controller 102 controls the display unit 13 to display a screen showing the data about the resource control for the energy resource 20. The display controller 102 allows the display unit 13 to display a parameter input screen G1 (refer to FIG. 5), an energy resource input screen G2 (refer to FIG. 6), a result confirmation screen G3 (refer to FIG. 7), a data download screen G4 (refer to FIG. 8), a DR event result information screen G5 (refer to FIG. 9), and a peak cut screen G6 (refer to FIG. 10). When the display unit 13 is provided to the client terminal installed at a location other than the energy resource control device 10, the display controller 102 has a server function as a web server and communicates with the client terminal via the communications unit 11.

The parameter input screen G1 is a screen for receiving an input(s) of the parameter(s) relating to the power service from the operator u1. The energy resource input screen G2 is a screen for receiving from the operator u1: an input of a selection condition for energy resources 20; and an input of a control target energy resource as a target to be controlled, of one or more energy resources 20 which satisfy the selection condition. The result confirmation screen G3 is a screen displaying: the control result obtained based on the control command; and the measuring data obtained by controlling based on the control command. The data download screen G4 is a screen for receiving from the operator u1 an instruction for downloading the measuring data to another storage area. The DR event result information screen G5 is a screen displaying a result of the control performed based on the DR event notified from the server 60 managed by the transmission and distribution company, the retail electricity provider, the aggregation coordinator, the regional energy utility, or the like. The peak cut screen G6 is a screen displaying the target value of the peak cut (the peak cut target value) and the measuring data, when the peak cut target value has been set.

That is to say, the display controller 102 allows the display unit 13 to display the energy resource input screen G2 for receiving: an input of the selection condition for the energy resources 20; and an input of setting, to the control target energy resource, at least one energy resource 20, which satisfies the selection condition, of the energy resources 20. The display controller 102 allows the display unit 13 to display the parameter input screen G1 for receiving the inputs of the parameters relating to the power service. The display controller 102 further allows the display unit 13 to display a control result screen(s) about the control result (e.g., the result confirmation screen G3 and the DR event result information screen G5). In this embodiment, the control result includes a control result obtained based on the control command and the measuring data obtained by controlling based on the control command.

The generator 103 generates the control command for the energy resource 20 as the control target energy resource that is a target to be controlled. Specifically, the generator 103 generates the control command based on the control target energy resource according to the input of setting, received on the energy resource input screen G2, and the measuring data acquired by the data acquirer 101. For example, the generator 103 generates the control command relating to the adjustment of the control target energy resource for the amount of power to be consumed in the facility 5 based on the control target energy resource and the measuring data obtained by the data acquirer 101.

When the inputs of the parameters are received from the operator u1 on the parameter input screen G1, the generator 103 generates the control command based on the parameters received and the measuring data acquired by the data acquirer 101. For example, when receiving information about the DR event from the server 60 managed by the transmission and distribution company, the retail electricity provider, the aggregation coordinator, the regional energy utility, or the like, the generator 103 decides the mode of the energy resource 20 and the amount of power, the power, the current, etc. to be supplied or consumed by the energy resource 20 based on the reference value input on the parameter input screen G1 and the measuring data acquired by the data acquirer 101 such that a total value of the purchased powers in the plurality of facilities 5 included in the control target area 5A is made closer to a difference between the DR event and the reference value. The generator 103 generates the control command including a value decided.

When the inputs of the parameters are received on the parameter input screen G1 and the input of the control target energy resource is received on the energy resource input screen G2, the generator 103 generates the control command based on the control target energy resource, the parameters, and the measuring data.

When the event reception part 105 receives information about the DR event, the generator 103 generates the control command based on the DR event.

The outputter 104 allows the communications unit 11 to output the control command generated by the generator 103 to the management device 50. In this case, the management device 50 outputs the control command received to the energy resource 20, as a target to be controlled, through the communications unit 11.

The event reception part 105 receives the information about the DR event notified from the server 60.

The notification part 106 allows the communications unit 11 to transmit the measuring data acquired from each facility 5, or a value calculated from the measuring data to the server 60.

The processor 107 performs a processing of updating the parameters stored in the storage unit 12 and a processing of downloading data designated by the operator u1.

Details of the screen configurations of the parameter input screen G1, the energy resource input screen G2, the result confirmation screen G3, the data download screen G4, the DR event result information screen G5, and the peak cut screen G6 will be described later.

### (3) Operation

### (3.1) Operation of Energy Resource Control Device

Herein, an operation of the energy resource control device 10 will be described with reference to FIG. 3.

The energy resource control device 10 allows the display unit 13 to display the parameter input screen G1 in response to an operation of the operator u1 to receive the inputs of the parameters relating to the power service from the operator u1 (in Step S1). Thereafter, the processor 107 updates the parameters. Step S1 may be executed at any time before the generation of the control command by the generator 103 is executed. If it is necessary to transmit the values of the parameters to the server 60, Step S1 can be executed until the time when the values are transmitted.

The energy resource control device 10 allows the display unit 13 to display the energy resource input screen G2 in response to an operation of the operator u1 to receive the input of the energy resource 20, as a target to be controlled, from the operator u1 (in Step S2).

The generator 103 of the energy resource control device 10 generates the control command for the control target energy resource 20, as the target to be controlled, based on the control target energy resource 20 and the measuring data for the control target energy resource 20 (in Step S3).

The outputter 104 of the energy resource control device 10 outputs the control command generated by the generator 103 to the control target energy resource 20 (in Step S4).

The data acquirer 101 acquires (collects) the measuring data from each facility 5 and stores it in the storage unit 12 (in Step S5). The notification part 106 allows the communications unit 11 to transmit (report) the measuring data acquired from each facility 5 or the value calculated from the measuring data to the server 60 (in Step S6).

The display controller 102 allows the display unit 13 to display the result confirmation screen G3 in response to an operation of the operator u1 to present the control result obtained based on the control command and the measuring data obtained by controlling based on the control command (in Step S7). The display controller 102 may allow the display unit 13 to display the DR event result information screen G5 instead of the result confirmation screen G3. In FIG. 3, Step S7 is executed after Step S6, but it may be executed between Steps S3 and S6 in response to an operation of the operator u1.

The energy resource control device 10 allows the display unit 13 to display the energy resource input screen G2 again in response to an operation of the operator u1 to receive the input of the control target energy resource 20 from the operator u1 again (in Step S8). For example, if for some reason a certain energy resource cannot be controlled, the certain energy resource can be removed from the target to be controlled. In FIG. 3, Step S8 is executed after Step S7, but it may be executed between Steps S3 and S7 in response to an operation of the operator u1.

The generator 103 of the energy resource control device 10 determines whether or not a control period is ended (in Step S9).

If the generator 103 determines that the control period is not ended (if the answer in Step S9 is "No"), the process returns to Step S3.

If the generator 103 determines that the control period is ended (if the answer in Step S9 is "Yes") and further the display controller 102 receives an operation for displaying the data download screen G4 from the operator u1, the display controller 102 allows the display unit 13 to display the data download screen G4. Thereafter, the processor 107 of the energy resource control device 10 performs the download processing (in Step S10). For example, the processor 107 may receive, from the operator u1, a designation of data to be downloaded. The processor 107 may download the data designated from the operator u1 to a predetermined storage area. If the display unit 13 is provided to the client terminal located at a location other than the energy resource control device 10, the data designated by the operator u1 may be downloaded to a predetermined storage area of the client terminal. In FIG. 3, Step S10 is executed after Step S9, but it may be executed between Steps S1 and S7 in response to an operation of the operator u1.

### (3.2) Operation of Power Control System

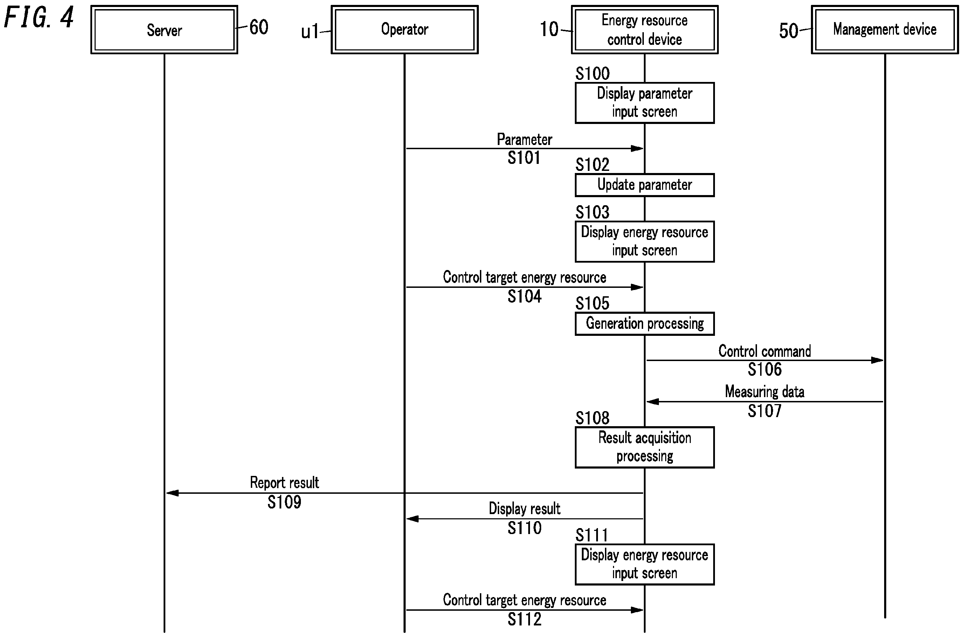

The operation of the power control system 1000 will be described with reference to FIG. 4. Herein, the operation of the power control system 1000 corresponding to the above-described Steps S1 to S8 will be described.

The display controller 102 of the energy resource control device 10 allows the display unit 13 to display the parameter input screen G1 in response to an operation of the operator u1 (in Step S100). The energy resource control device 10 receives the inputs of parameters relating to the power service from the operator u1 (in Step S101).

In Step S102, the control unit 14 of the energy resource control device 10 updates the parameters stored in the storage unit to the parameters received in Step S101. As described above, the input and the update of the parameters may be performed at any time before the generation of the control command is executed.

The display controller 102 allows the display unit 13 to display the energy resource input screen G2 in response to an operation of the operator u1 (in Step S103). The energy resource control device 10 receives the input of the control target energy resource 20 from the operator u1 (in Step S104).

The generator 103 generates the control command for the control target energy resource 20 based on the control target energy resource 20 and the measuring data for the control target energy resource 20 (in Step S105).

The outputter 104 outputs the control command generated by the generator 103 to the control target energy resource 20 (in Step S106). The management device 50 controls the control target energy resource 20 based on the control command received. The management device 50 transmits the measuring data measured by the distribution panel 40 to the energy resource control device 10 (in Step S107).

The data acquirer 101 performs a result acquisition processing (in Step S108). Specifically, the data acquirer 101 acquires the measuring data from each facility 5 and stores it in the storage unit 12. The notification part 106 allows the communications unit 11 to transmit the measuring data acquired from each facility 5 or the value calculated from the measuring data, as the result information, to the server 60 (in Step S109).

The display controller 102 allows the display unit 13 to display the result confirmation screen G3 in response to an operation of the operator u1 to present the control result obtained based on the control command and the measuring data obtained by controlling based on the control command (in Step S110). The display controller 102 may allow the display unit 13 to display the DR event result information screen G5 instead of the result confirmation screen G3. In FIG. 4, Step S110 is executed after Step S109, but it may be executed between Steps S105 and S109 in response to an operation of the operator u1.

The display controller 102 allows the display unit 13 to display the energy resource input screen G2 again in response to an operation of the operator u1 (in Step S111). The energy resource control device 10 again receives the input of the control target energy resource 20 from the operator u1 (in Step S112). Thereafter, the process returns to Step S105 and Steps S105 to S112 are repeated. In FIG. 4, Steps S111 and S 112 are executed after Step S110, but it may be executed between Steps S105 and S110 in response to an operation of the operator u1.

In addition to the above-described processing, the download processing of data is performed. Specifically, the display controller 102 allows the display unit 13 to display the data download screen G4 in response to an operation of the operator u1. The processor 107 performs the download processing in accordance with an operation of the operator u1. For example, the processor 107 receives the designation of data to be downloaded from the operator u1 and downloads the data designated by the operator u1 to the predetermined storage area. As described above, the data may be downloaded at any time.

### (4) Screen

Hereinafter, each of the screens displayed by the display unit 13 will be described.

### (4.1) Parameter Input Screen

The parameter input screen G1 is displayed by the display unit 13 when the controllable amount (as the amount of power that can be supplied by the energy resource 20) and the reference value (as the amount of power to be consumed in the facility 5) are decided. The parameter input screen G1 includes a menu display area R11 and a parameter input area R12, as shown in FIG. 5.

The menu display area R11 displays buttons B110-B117 for the operator u1 to select, from the screens, any screen desired to be displayed by the display unit 13.

The buttons B110-B117 correspond one-to-one to the screens that can be displayed by the display unit 13. For example, the button B112 corresponds to the parameter input screen G1. The button B113 corresponds to the energy resource input screen G2, and the button B114 corresponds to the result confirmation screen G3. The button B115 corresponds to the DR event result information screen G5, and the button B116 corresponds to the data download screen G4. The button B117 corresponds to the peak cut screen G6. When the operator u1 performs a prescribed operation (e.g., a push operation) on one button of the buttons B110-B117, the display unit 13 displays a screen corresponding to the one button. For example, when the operator u1 performs the prescribed operation on the button B112, the display unit 13 displays the parameter input screen G1. The menu display area R11 may be fixedly displayed and only the parameter input area R12 of the parameter input screen G1 may be updated. Display or non-display of the menu display area R11 may be selected. When the operator u1 performs the prescribed operation on the button B113, the display unit 13 displays the energy resource input screen G2. When the operator u1 performs the prescribed operation on the button B114, the display unit 13 displays the result confirmation screen G3. When the operator u1 performs the prescribed operation on the button B115, the display unit 13 displays the DR event result information screen G5. When the operator u1 performs the prescribed operation on the button B116, the display unit 13 displays the data download screen G4. When the operator u1 performs the prescribed operation on the button B117, the display unit 13 displays the peak cut screen G6.

The parameter input area R12 displays data relating to the parameter input, and input areas, etc. Specifically, the parameter input area R12 includes a date input area R120, a menu type input area R121, a selection button B120, a graph display area R122, a possible amount setting area R123, and a reference value setting area R124.

In the date input area R120, a target date to be controlled by the energy resource control device 10 is input.

The menu type input area R121 displays menus for supply and demand adjustment markets etc. in a pull-down menu format. For example, in the menu type input area R121, the operator u1 may select one menu from the menus such as "tertiary adjustment power 1" (downward DR) and "tertiary adjustment power 2" (downward DR). The one menu may include two types of demand responses: a downward DR and an upward DR. In this case, another button different from the "menu type" may be provided to select either the downward DR or the upward DR.

The selection button B120 is a button to be operated in deciding the target date and the menu for executing the control by the energy resource control device 10. When the operator u1 performs a prescribed operation (e.g., a push operation) on the selection button B120, the target date and the menu are decided in accordance with the date input to the date input area R120 and the contents selected in the menu type input area R121. If the date exceeds a certain time when the parameter can be input, the selection button B120 may be controlled such that the push operation is not allowed, or an error indication may be made after the push operation is performed on the selection button B120. The selection button B120 may be omitted, and in this case, the target date or the menu for the control by the energy resource control device 10 may be decided in response to the operation on the date input area R120 or the menu type input area R121.

The graph display area R122 displays a graph of the power. Specifically, the display unit 13 displays on the graph display area R122: a graph L1 representing a change in the average value of the power consumption per reference time (e.g., 30 minutes), consumed for the last three days in the facility 5; a graph L2 representing a change in the reference value stored in the storage unit 12 per reference time; and a graph L3 representing a change in a target value of the purchased power of the facility 5 per reference time. The target value of the purchased power mentioned herein is a value obtained by subtracting the controllable amount stored in the storage unit 12 from the reference value stored in the storage unit 12. The controllable amount is any of a system calculation value, details of the system calculation value, and the latest registered value, which will be described later. The graph L1 is a graph intended to check a difference from the graph L2, that is to say, a difference between the past actual value (or the predicted value on the day) and the reference value on the day. The method of calculating the graph L1 is not limited to the method as described above. The graph L1 may show an average value of the actual values for a prescribed period (e.g., one week), an average value of the actual values on the same day of the week for a prescribed period (e.g., one month), or an average value of the actual values on weekdays or holidays for a prescribed period (e.g., one week).

The possible amount setting area R123 receives an input for setting the controllable amount to be stored in the storage unit 12 from the operator u1. In this embodiment, one controllable amount is supposed to be set for the whole of the control target area 5A.

The possible amount setting area R123 includes a possible amount setting list R126 where 24 hours are divided into 30 minutes units.

The possible amount setting list R126 includes the system calculation value (hereinafter, referred to as a "first calculation value"), the details of the system calculation value, and the latest registered value (hereinafter, referred to as a "first registered value"), which are displayed in 30 minutes units. The first calculation value is the controllable amount calculated and stored by the energy resource control device 10. The details of the first calculation value include values corresponding to types of the energy resources 20 (such as a power conditioner for electric vehicle and a storage battery). In the possible amount setting list R126, as an example, a value for each of the power conditioner for electric vehicle and the storage battery, which is calculated as an individual controllable amount by the energy resource control device 10, is stored in 30 minutes units. In FIG. 5, the details of the first calculation value include the respective values corresponding to the types of the energy resources 20, but should not be construed as limiting. Alternatively, the details of the first calculation value may include respective values corresponding to facilities 5, or respective values corresponding to groups, each of which includes one or more facilities 5.

Optionally, an input field may be provided to the possible amount setting list R126 such that the controllable amount in a time zone corresponding to the input field can be input before the first calculation value or the first registered value is displayed on the possible amount setting list R126. In this case, the value input in the input field of the possible amount setting list R126 may be reflected as the first registered value by the operator u1 performing a prescribed operation. In response to the reflection, the first registered value stored in the energy resource control device 10 may be also updated. If the controllable amount exceeding a prescribed range (e.g., the controllable amount more than or equal to a rated value of the energy resource 20) is input in the input field by the operator u1, an error indication may be made. When values are stored (set) in both the first calculation value and the first registered value, the first registered value may be prioritized and stored in the storage unit 12 as the controllable amount to be used for generating the control command. That is to say, the controllable amount input by the operator u1 may be applied preferentially over the controllable amount calculated by the energy resource control device 10.

The reference value setting area R124 receives an input from the operator u1 to set the reference value to be stored in the storage unit 12. In this embodiment, one reference value is supposed to be set for the whole of the control target area 5A.

The reference value setting area R124 includes: an offset value input area R127 for correcting the reference value calculated by the energy resource control device 10; a button B123; a reference value setting list R128 where 24 hours are divided in prescribed time units (e.g., 1 minute units, 30 minutes units, control periods, etc., and in this embodiment, 30 minutes units); and a button B124.

The offset value input area R127 receive an input of an offset value for correcting the reference value (calculated by the energy resource control device 10) in response to an operation of the operator u1. The offset value includes any of a negative value, zero, and a positive value.

The button B123 is operated in setting the offset value. When the operator u1 performs a prescribed operation (e.g., a push operation) on the button B123, the offset value input to the offset value input area R127 is reflected in the reference value setting list R128.

The reference value setting list R128 includes: the system calculation value (hereinafter, referred to as a "second calculation value"); the latest registered value (hereinafter, referred to as a "second registered value"); and an input field, which are displayed in 30 minutes units. The second calculation value is the reference value calculated by the energy resource control device 10. In this embodiment, the details of the reference value are not displayed, but the details may be displayed in the same way as the controllable amount. When the offset value is set in the offset value input area R127, the second calculation value is changed to a result obtained by adding the offset value to the reference value calculated by the energy resource control device 10. In this case, the second calculation value on the list R128 may be updated and displayed in response to the change of the reference value, or the second registered value (managed by the storage unit 12 of the energy resource control device 10) may be updated based on the result obtained by adding the offset value to the second calculation value.

The input field of the reference value setting list R128 is an area for inputting the reference value in a corresponding time zone in response to an operation of the operator u1. The second registered value is the latest value, input and stored in the input field of the reference value setting list R128 by the operator u1 before the present operation.

The button B124 is operated to reflect, as the second registered value, the value input in the input field of the reference value setting list R128. When the operator u1 performs a prescribed operation (for example, a push operation) on the button B124, the value input in the input field of the reference value setting list R128 is reflected as the second registered value. In this case, the second registered value stored in the energy resource control device 10 is also updated in response to the reflection. When the button B123 or B124 is operated, the graph L2 of the graph display area R122 is recalculated and updated. If the reference value exceeding a prescribed range is input in the input field by the operator u1, an error indication may be made.

When values are stored (set) in both the second calculation value and the second registered value, the second registered value may be prioritized and stored in the storage unit 12 as the reference value to be used for generating the control command. That is to say, the reference value input by the operator u1 may be applied preferentially over the reference value calculated by the energy resource control device 10.

In this embodiment, the parameters include the reference value. Therefore, the parameter input screen G1 receives, in the offset value input area R127 or the input field of the reference value setting list R128, an input of the offset value with respect to the parameter (the reference value) which has been displayed as the second calculation value, or an input of a new second registered value. When the input of the offset value is received and a prescribed operation is performed on the button B123, the generator 103 reflects the offset value on the reference value, which has been displayed as the second calculation value, and sets a result reflected to a new second registered value (new reference value). When the input of a new second registered value is received and a prescribed operation is performed on the button B124, the generator 103 sets the second registered value input directly to a new second registered value (new reference value). The generator 103 uses the new reference value (parameter) as the new second registered value to generate the control command. When the second registered value has not been displayed (has not been set), the generator 103 uses the second calculation value to generate the control command.

### (4.2) Energy Resource Input Screen

The energy resource input screen G2 is displayed on the display unit 13 to decide the facility 5 as a target to be controlled (i.e., the control target energy resource 20). The energy resource input screen G2 includes a menu display area R21 and an energy resource input area R22, as shown in FIG. 6.

The menu display area R21 displays buttons B110-B117 for the operator u1 to select, from the screens, any screen desired to be displayed by the display unit 13. Since the detailed explanations of the buttons B110-B117 have already been described in the paragraphs about the parameter input screen G1, the description thereof will be omitted.

The energy resource input area R22 displays an input of a condition(s) for deciding the energy resource as a target to be controlled, information about one or more energy resources 20 as one or more candidates for the target to be controlled, etc. Specifically, the energy resource input area R22 includes a condition input area R221 and a control target selection area R222.

The condition input area R221 includes a plurality of checkboxes B221. The plurality of checkboxes B221 correspond one-on-one to a plurality of condition items included in the selection condition for specifying the energy resource 20 as a target to be controlled. The plurality of selection items may include, for example, a missing rate of the measuring data, a characteristic of the measuring data, an analysis result of the measuring data, a prediction result based on the measuring data, responsiveness of the energy resource 20 with respect to the control command, an identifier of the facility 5, a characteristic of the facility 5, a type of the energy resource 20, an identifier of the energy resource 20, a state of the energy resource, and a characteristic of the energy resource. That is to say, the selection condition includes a missing rate of the measuring data, a characteristic of the measuring data, an analysis result of the measuring data, a prediction result based on the measuring data, responsiveness of the control target energy resource 20 with respect to the control command, an identifier of the facility 5, a characteristic of the facility 5, a type of the control target energy resource 20, an identifier of the control target energy resource 20, a state of the control target energy resource, and a characteristic of the control target energy resource. The missing rate of the measuring data is a missing rate of data measured by, for example, the power meter (smart meter). The responsiveness of the energy resource 20 with respect to the control command is supposed to be, for example, responsiveness of a heat pump (HP) water heater (e.g., with or without a receiving function to receive the control command). The type of the energy resource 20 is supposed to be, for example, a functional type of a photovoltaic power generation system (e.g., with or without a function of reversely making the power flow to the power grid). The identifier of the energy resource 20 is supposed to be, for example, an identifier assigned to (the energy resource 20 of) the facility 5.

The selection condition may include one or more conditions selected from the group consisting of: the missing rate of the measuring data; the characteristic of the measuring data; the analysis result of the measuring data; the prediction result based on the measuring data; the responsiveness of the control target energy resource 20 with respect to the control command; the identifier of the facility 5; the characteristic of the facility 5; the type of the control target energy resource 20; the identifier of the control target energy resource 20; the state of the control target energy resource; and the characteristic of the control target energy resource. In other words, the selection condition may include at least one selected from the group described above.

The selection item related to the missing rate of the measuring data (the missing rate of the data measured by the power meter) includes one or more (three in the example shown) pull-down type selection fields M221-M223 for setting more detailed conditions. In the selection field M221, an acquisition period of data is selected. In the selection field M222, a threshold value of the missing rate is selected. In the selection field M223, it is selected whether the missing rate is "equal to or more than" or "less than" the threshold selected in the selection field M222. In the example shown in FIG. 6, the condition for the missing rate is selected to "Missing rate of last one day is 5% or more than."

The selection item related to the responsiveness of the energy resource 20 with respect to the control command (the responsiveness of the HP water heater) includes one or more (one in the example shown) pull-down type selection fields M224 for setting the responsiveness of the HP water heater in more detail. In the selection field M224, it is selected whether or not the HP water heater has received the control command. In the example shown in FIG. 6, the condition for the function of the HP water heater: "Is HP water heater has receiving control command?" is selected to "Yes."

The selection item related to the type of the energy resource 20 (the functional type of the photovoltaic power generation system) includes one or more (one in the example shown) pull-down type selection fields M225 for setting the functional type of the photovoltaic power generation system in more detail. In the selection field M225, it is selected whether or not the photovoltaic power generation system has a function of reversely making the power flow to the power grid. In the example shown in FIG. 6, the condition for the function of the photovoltaic power generation system: "Does photovoltaic power generation system without function of reversely power flow?" is selected to "No."

The selection item related to the identifier of the energy resource 20 (the identifier assigned to the energy resource 20 of the facility 5) includes one or more (one in the example shown) pull-down type selection fields M226 for setting more detailed conditions. In the selection field M226, an identifier of the energy resource 20 (energy resource ID) as the energy resource 20 is selected.

The condition input area R221 further includes a button B222. The button B222 is provided as a button on which the operator u1 performs a prescribed operation (e.g., a pushing operation), after selecting any one from the checkboxes B221 and making the detailed setting for the condition corresponding to the checkbox B221 selected. The energy resource(s) 20, which satisfies the condition corresponding to the checkbox B221 selected from the checkboxes B221, is extracted from the energy resources 20 in response to the prescribed operation performed on the button B222.

The control target selection area R222 displays a graph showing a change in the power amount for the last one day in at least one facility 5 included in the control target area 5A. In FIG. 6, three graphs Gr1, Gr2, and Gr3 are displayed, which respectively show changes in the power amounts for the last one day in three facilities 5.

In the graph Gr2, the power amount is not displayed. This indicates that the energy resource control device could not receive the power or the amount of power (i.e., the measuring data), measured by the power meter (smart meter). In other words, the graph Gr2 shows that the missing rate of the data is 100%. In the graph Gr1, two lines L21 and L22 are displayed. The line L21 shows a change in the power in units of 1 minute, and the line L22 (dashed line L22) represents a change in the power in units of 30 minutes. Similar to the graph Gr1, the graph Gr3 displays two lines respectively showing a change in the power in units of 1 minute and a change in the power in units of 30 minutes. Alternatively, either the change in the power in units of 1 minute or the change in the power in units of 30 minutes may be displayed. The measuring data of the power meter is displayed in the above described example, but the measuring data of the energy resource (such as charging power) may be displayed.

The control target selection area R222 includes a plurality of checkboxes B223-B227 (five in the example shown) and a button B228. The checkbox B223 is provided as a button on which a prescribed operation is performed to set (the energy resources 20 of) all of the facilities 5 displayed in the control target selection area R222 to targets to be controlled. The checkbox B224 is provided as a button on which a prescribed operation is performed to exclude (the energy resources 20 of) all of the facilities 5 displayed in the control target selection area R222 from targets to be controlled. The checkboxes B225-B227 correspond one-to-one to the facilities 5 displayed in the control target selection area R222. The checkboxes B225-B227 are provided as buttons on which a prescribed operation is performed to individually select any facility 5 as a target to be controlled from the facilities 5 displayed in the control target selection area R222.

The button B228 is provided as a button on which a prescribed operation (e.g., a push operation) is performed by the operator u1 after at least one of the plurality of checkboxes B223-B227 is selected by him/her.

The energy resource control device 10 decides the facility 5 as a target to be controlled (i.e., the energy resource 20) based on the at least one selected from the plurality of checkboxes B223-B227 when the prescribed operation is performed on the button B228. In case of displaying the measuring data of the energy resource (such as charging power), the plurality of checkboxes B223-B227 may be provided to set the energy resources 20 as targets to be controlled.

The control target selection area R222 displays the graphs in the above example but should not be construed as limiting. Alternatively, the list of the facilities and the energy resources 20 specified by the condition input area R221 may be displayed in a tabular format instead of the graphs.

Also, when the button B228 is operated, the target to be controlled is set based on the checkboxes B223-B227 in the above example but should not be construed as limiting. Alternatively, input fields may be provided to set the characteristics of the energy resources 20 instead of the checkboxes. For example, the maximum discharging power and the maximum charging power of the energy resource 20 may be input to the input fields to be set.

### (4.3) Result Confirmation Screen

The result confirmation screen G3 is a screen to be displayed by the display unit 13 when the operator confirms the result of the amount of the power consumed in the facility 5. As shown in FIG. 7, the result confirmation screen G3 includes a menu display area R31 and a result display area R32.

The menu display area R31 display buttons B110-B117 for the operator u1 to select, from the screens, any screen desired to be displayed by the display unit 13. Since the detailed explanations of the buttons B110-B117 have already been described in the paragraphs about the parameter input screen G1, the description thereof will be omitted.

The result display area R32 includes a first display area R321, a second display area R322, and a third display area R323, as shown in FIG. 7.

The first display area R321 displays a graph Gr31. The graph Gr31 with the axis of abscissas as time and the axis of ordinates as power (or an amount of power) shows a change in a total of powers (or a total of amounts of power) consumed at the plurality of facilities 5 included in the control target area 5A. The upper line L31 of the graph Gr31 represents the change in the total of powers (or the total of amounts of power) in units of 30 minutes.

The second display area R322 displays a graph Gr32. The graph Gr32 with the axis of abscissas as time and the axis of ordinates as power (or an amount of power) shows a change in power (or an amount of power) consumed at one of the plurality of facilities 5 included in the control target area 5A. The upper line L33 of the graph Gr 32 represents the change in the power (the amount of power) in units of 30 minutes. The facility 5 as a target to be displayed in the second display area R322 may be changed in response to an operation of the operator u1.

The third display area R323 displays a graph Gr33. The graph Gr33 with the axis of abscissas as time and the axis of ordinates as power (or an amount of power) shows a change in an amount of power supplied from the energy resource 20. The upper line L35 of the graph Gr 33 represents the change in the power (or the amount of power) in units of 30 minutes. In this embodiment, a target to be displayed in the third display area R323 is the energy resource 20 provided in the facility 5 as a target to be displayed in the second display area R322. When the facility 5 as a target to be displayed in the second display area R322 is changed, the energy resource 20 to be displayed in the third display area R323 is also changed in response to the change of the facility 5.

Although each of the lines L31, L33, and L35 shows the power (or the amount of power) in units of 30 minutes in the above explanations, a pull-down menu, etc. for selecting the sampling period may be provided. Alternatively, a target time period of the data to be displayed in the graph may be changed by selecting any area in each of the graphs Gr31, Gr32, and Gr33.

### (4.4) Data Download Screen

The data download screen G4 is a screen to be displayed by the display unit 13 when the measuring data (the amount of power) is downloaded to a prescribed storage area. The data download screen G4 includes a menu display area R41 and a data selection area R42, as shown in FIG. 8.

The menu display area R41 displays buttons B110-B117 for the operator u1 to select, from the screens, any screen desired to be displayed by the display unit 13. Since the detailed explanations of the buttons B110-B117 have already been described in the paragraphs about the parameter input screen G1, the description thereof will be omitted.

The data selection area R42 includes a first input area R421, a second input area R422, a period selection area R423, a facility selection area R424, an energy resource selection area R425, an energy resource ID selection area R426, and a data type selection area R427. The first input area R421 is provided for inputting a start date and time of a time period in which the data to be downloaded was measured. The second input area R422 is provided for inputting an end date and time of the time period in which the data to be downloaded was measured. The period selection area R423 is provided for selecting a sampling period of the data measured. Specifically, the period selection area R423 displays selectable sampling periods in a pull-down format. In this embodiment, since the power is measured in both of units of 1 minute and units of 30 minutes, for example, "1 minute" and "30 minutes" as the selectable sampling periods are displayed in a pull-down format. The facility selection area R424 is provided for selecting at least one of the plurality of facilities 5 included in the control target area 5A. The energy resource selection area R425 is provided for selecting at least one of the plurality of energy resources 20. The energy resource ID selection area R426 is provided for selecting at least one energy resource ID from a plurality of energy resource IDs. The data type selection area R427 is provided for selecting a type of data to be downloaded. In this embodiment, the types of data include, for example, charging power and discharging power. In the data type selection area R427, at least one of the charging power or the discharging power may be selected. If the number of the control target areas 5A is two or more, any control target area 5A may be selected from the two or more control target areas 5A before the selection of the type of the facility. In FIG. 8, as one example, the facility selection area R424, the energy resource selection area R425, the energy resource ID selection area R426, and the data type selection area R427 are shown in that order such as target items in their selection areas are selected and specified in that order, but should not be construed as limiting. Alternatively, the target items may be independently selected and specified.

The data selection area R42 further displays a button B421. The button B421 is provided as a button on which the operator u1 performs a prescribed operation (e.g., a push operation) after performing the input or the selection with respect to the first input area R421, the second input area R422, the period selection area R423, the facility selection area R424, the energy resource selection area R425, the energy resource ID selection area R426, and the data type selection area R427. In response to that the prescribed operation is performed on the button B421, the processor 107 starts downloading the measuring data, which satisfies a predetermined condition, into the prescribed storage area. Specifically, the processor 107 downloads, into the prescribed storage area, the measuring data satisfying all the contents, input or selected with respect to the first input area R421, the second input area R422, the period selection area R423, the facility selection area R424, the energy resource selection area R425, the energy resource ID selection area R426, and the data type selection area R427. The number of downloads or the file size may be displayed before downloading the measuring data. If the number of downloads or the file size exceeds a predetermined threshold value, an error indication may be made.

### (4.5) DR Event Result Information Screen

The DR event result information screen G5 is provided as a screen on which the display unit 13 displays information about control based on: a command relating to the demand response received from the server 60; or the control command generated by the energy resource control device 10. As shown in FIG. 9, the DR event result information screen G5 includes a menu display area R51 and a DR event result display area R52.

The menu display area R51 displays buttons B110-B117 for the operator u1 to select, from the screens, any screen desired to be displayed by the display unit 13. Since the detailed explanations of the buttons B110-B117 have already been described in the paragraphs about the parameter input screen G1, the description thereof will be omitted.

The DR event result display area R52 includes a first display area R521 and a second display area R522.

The first display area R521 includes a third display area R523. The third display area R523 displays: the date and time when the control according to the demand response was performed; and a menu representing any one of the tertiary adjustment power 1 (downward DR), the tertiary adjustment power 2 (downward DR), and the like.

The first display area R521 displays a result list R524. The result list R524 shows reference values, command values (control commands), control target upper limits, control target lower limits, success upper limits, success lower limits, meter values, errors and success determinations every 30 minutes in a time period for which the control according to the demand response was performed.

The reference value in the screen corresponds to a reference value managed by the storage unit, of the second calculation value or the second registered value, described on the paragraphs about the parameter input screen.

The command value in the screen corresponds to a value of the command relating to the demand response received from the server 60.

The control target upper limit corresponds to an upper limit of a control target range, obtained based on the reference value and the command value. The control target lower limit corresponds to a lower limit of the control target range, obtained based on the reference value and the command value. If the command value relating to the demand response received from the server 60 is not changed, the control target upper limit is equal to the control target lower limit, and accordingly, the control target upper limit (= the control target lower limit) is equal to a value obtained by subtracting the command value from the reference value (when the command value is set to be positive in response to that the command relating to the demand response received from the server 60 represents the downward DR, or when the command value is set to be negative in response to that the command represents the upward DR). On the other hand, if the control command (command value) is changed, at least one of the control target upper limit or the control target lower limit is also changed.

The success upper limit corresponds to an upper limit of a control success determination range to be applied for determining whether or not the control is successful. The success lower limit usually corresponds to a lower limit of the control success determination range. Using a prescribed ratio (e.g., 10%) of the success determination range to the controllable amount, the "success upper limit" may be equal to a value obtained by adding the "control target upper limit" to 10% of the "controllable amount." On the other hand, the success lower limit may be equal to a value obtained by subtracting 10% of the "controllable amount" from the "control target lower limit." Note that, if the control command (command value) is changed, at least one of the control target upper limit or the control target lower limit is also changed, and accordingly, the range between the success lower limit and the success upper limit may be wider than 20% of the "controllable amount." For example, if the control target upper limit is changed, the success upper limit may be greater than an upper limit of a range of "-10% to +10%" based on the controllable amount. Also, if the control target lower limit is changed, the success lower limit may be less than a lower limit value of the range of "-10% to +10%" based on the controllable amount.

The meter value represents an amount of power (e.g., the total of powers or the total of amounts of power, consumed at the plurality of facilities 5) measured in a corresponding time zone displayed in the result list R524, of the date displayed in the third display area R523.

The error corresponds to, for example, a ratio of a value, obtained by subtracting the meter value from the control target value, with respect to the controllable amount.

The success determination represents a result about whether or not the control according to the demand response was successful. Specifically, if the meter value falls within the range from the success upper limit to the success lower limit in the corresponding time zone, the control according to the demand response is determined to be successful and "OK" is displayed as the result of the determination. On the other hand, if the meter value does not fall within the range from the success upper limit to the success lower limit in the corresponding time zone, the control according to the demand response is determined to be failed and "NG" is displayed as the result of the determination. The display content need not necessarily be "OK" or "NG," as long as the success or failure of the control can be visually known.

The second display area R522 displays an energy resource list R525. The energy resource list R525 displays one or more pairs, each of which includes a DR event date and an energy resource ID. The DR event date represents a date on which the control according to the demand response was performed. The energy resource ID represents an energy resource ID of the energy resource 20 in which the control according to the demand response was performed on the DR event date.

### (4.6) Peak Cut Screen

The peak cut screen G6 is provided as a screen displayed by the display unit 13 to set a target value for the peak cut (referred to also as a "peak cut target value"). The peak cut screen G6 includes a menu display area R61 and a target value setting area R62, as shown in FIG. 10.

The menu display area R61 displays buttons B110-B117 for the operator u1 to select, from the screens, any screen desired to be displayed by the display unit 13. Since the detailed explanations of the buttons B110-B117 have already been described in the paragraphs about the parameter input screen G1, the description thereof will be omitted.

The target value setting area R62 includes a first selection area R621, a graph display area R622, a second selection area R623, and a list display area R624. Also, the target value setting area R62 displays buttons B621 and B622.

The first selection area R621 is an area for selecting a facility to which the peak cut target value is set. Specifically, the first selection area R621 displays, in a pull-down format, one or more names of facilities 5 which are selectable. The graph display area R622 displays a graph Gr61. The graph Gr61 represents: the peak cut target value of the facility 5 selected in the first selection area R621; and a change in the power (or the amount of power) consumed at the facility 5 in the latest one day. Alternatively, the graph Gr61 may represent: the peak cut target value of the facility 5 selected in the first selection area R621; and a predicted value of power (or a predicted value of an amount of power) on the day when the target value setting area R62 is displayed. The line L61 shown in the graph Gr61 represents the peak cut target value. The line L62 represents the change in the power (or the amount of power) in units of 30 minutes. The second selection area R623 is provided to select an electric rate structure contracted by the facility 5. Specifically, the second selection area R623 displays, in a pull-down format, one or more electric rate structures which are selectable. The target time period of the data to be displayed in the graph may be changed by selecting any area in the graph Gr61. A peak cut implementation period, and a charging power period (or a discharging power period) outside the peak cut implementation period may be also set by selecting any area in the graph Gr61.

The list display area R624 displays a setting list R625. The setting list R625 shows an electric rate structure, contract power, a system calculation value (hereinafter, referred to as a "third calculation value"), and a latest registered value (hereinafter referred to as a "third registered value"). The setting list R625 includes an input field. The electric rate structure in the setting list R625 represents an electric rate structure selected in the second selection area R623. The contract power represents the maximum power contracted according to the electric rate structure selected in the second selection area R623. The third calculation value represents a peak cut value (i.e., the peak cut target value) calculated based on the contract power. The input field of the setting list R625 is an area for inputting the peak cut value (the peak cut target value) through an operation of the operator u1. The third registered value represents a value input to the input field of the setting list R625. In addition, the list display area R624 may display the amount of the basic fee obtained by multiplying the contract power by the unit price specified in the electric rate structure.

The button B621 is provided as a button on which the operator u1 performs a prescribed operation (e.g., a push operation) after making the selection in the first selection area R621. In response to that the prescribed operation is performed on the button B621, the display controller 102 allows the graph display area R622 to display the graph Gr61 for the facility 5 selected in the first selection area R621.

The button B622 is provided to be operated to reflect, as the third registered value, the value input to the input field of the setting list R625. When the operator u1 performs a prescribed operation (e.g., a push operation) on the button B622, the value input to the input field of the setting list R625 is reflected as the third registered value. If values are displayed (set) in both of the third calculation value and the third registered value, the third registered value may be prioritized and stored in the storage unit 12 as the peak cut target value. The generator 103 generates the control command for the energy resource 20 that is the control target energy resource as a target to be controlled based on the peak cut target value or any other value, stored in the storage unit 12.

If the third registered value is not displayed in the setting list R625, the line L61, which is displayed in the graph Gr61 to represent the peak cut target value, may represent the third calculation value displayed in the setting list R625. On the other hand, if the third registered value is displayed in the setting list R625, the line L61 may represent the third registered value displayed in the setting list R625. Note that, both of the third calculation value and the third registered value may be respectively displayed as lines L61.

### (4.7) Other Screens

The display unit 13 further displays an energy resource control screen and an RA (resource aggregator) unique event screen.

The energy resource control screen is displayed by the display unit 13 when the operator u1 performs the prescribed operation on the button B110 (refer to, for example, FIG. 5). The energy resource control screen is used to select any one or more schedules from a plurality of schedules for controlling the energy resource. The energy resource control screen is also used to register a new schedule for controlling the energy resource. Specifically, the operator u1 selects the facility 5 or the energy resource 20 and inputs a target date, a start time, and an end time (or may be a duration time), as the schedule for controlling the energy resource. The generator 103 controls the energy resource 20 based on the schedule input to the energy resource control screen. In addition, the energy resource control screen is used to check or delete the schedules registered.

The RA unique event screen is displayed by the display unit 13 when the operator u1 performs the prescribed operation on the button B111 (refer to, for example, FIG. 5). The RA unique event screen is used to set an event that a resource aggregator performs uniquely without the control command from the server 60. The RA unique event screen is also used to register a new event. Specifically, the new event can be registered by inputting, to the RA unique event screen, items similar to those of the control command from the server 60. For example, the menu type, the target date, the start time, the duration time, the command value, etc. may be input to the RA unique event screen. The parameter input screen G1 receives the parameter input from the operator u1 as in the case of receiving the control command from the server 60. The generator 103 decides the mode of the energy resource 20, and the amount of power, the power, the current, etc. to be supplied or consumed by the energy resource 20 based on the reference value input on the parameter input screen G1 and the measuring data acquired by the data acquirer 101 such that the total value of the purchased powers of the plurality of facilities 5 included in the control target area 5A is made closer to a difference between the DR event input on the RA unique event screen and the reference value. The generator 103 generates the control command including the value decided. The DR event result information screen G5 further displays the result of the control performed based on the DR event input on the RA unique event screen. The RA unique event screen is also used to check or delete the DR event registered.

In this embodiment, any of the following controls may be performed: the control based on the control command received from the server 60; the control based on the event input on the RA unique event screen; and the control based on the energy resource control screen. The generator 103 may generate the control command based on the priorities set to those controls. The priorities may be stored in the storage unit 12 in advance or may be input by the operator u1.

### (5) Advantages

As described above, the energy resource control system 1 according to this embodiment is configured to perform the resource control for energy resources to provide the power service. The energy resource control system 1 includes the data acquirer 101, the display controller 102, and the generator 103. The data acquirer 101 is configured to acquire the measuring data as the power information measured in the facility 5. The display controller 102 is configured to control the display unit 13 to display the data about the resource control. The generator 103 is configured to generate the control command for the control target energy resource that is a target of the resource control. The display controller 102 is further configured to allow the display unit 13 to display the energy resource input screen G2 for receiving: the input of the selection condition for the energy resources 20: and the input of the control target energy resource as the target of the resource control, of one or more energy resources 20 which satisfy the selection condition. The generator 103 is configured to generate the control command based on: the control target energy resource according to the input received on the energy resource input screen G2; and the measuring data acquired by the data acquirer 101.

According to this configuration, the input of the selection condition for the energy resources 20 and the input of the control target energy resource as the target of the resource control, of the one or more energy resources 20 which satisfy the selection condition, are received using the energy resource input screen G2. Therefore, the target to be controlled according to the demand response can be specified. Accordingly, the resource control for the energy resource 20 can be performed more accurately.

Also, the energy resource control system 1 according to this embodiment is configured to perform the resource control for energy resources to provide the power service. The energy resource control system 1 includes the data acquirer 101, the display controller 102, and the generator 103. The data acquirer 101 is configured to acquire the measuring data as the power information measured in the facility 5. The display controller 102 is configured to control the display unit 13 to display the data about the resource control. The generator 103 is configured to generate the control command for the control target energy resource that is a target of the resource control. The display controller 102 is further configured to allow the display unit 13 to display the parameter input screen G1 for receiving the input of the parameter relating to the power service. The generator 103 is configured to generate the control command based on: the parameter received on the parameter input screen G1; and the measuring data acquired by the data acquirer 101.

According to this configuration, the input of the parameter for the energy resource 20 is received using the parameter input screen G1, which can adjust the target value in the control according to the demand response. Accordingly, the resource control for the energy resource 20 can be performed more accurately.

### (6) Variation

Hereinafter, variations are listed. It should be noted that the variations described below may be applied as appropriate in combination with the embodiment described above.

### (6.1) First Variation

In the embodiment described above, the energy resource control device 10 is configured to set one parameter for the plurality of facilities 5 included in the control target area 5A, using the parameter input screen G1, but should not be construed as limiting.

The energy resource control device 10 may be configured to: set parameters individually for the plurality of facilities 5 included in the control target area 5A; or set parameters for groups constituted by the plurality of facilities 5; or set parameters for the energy resources, using the parameter input screen G1. In this case, the energy resource control device 10 may set the parameters of the entire control target area 5A, using the parameter input screen G1. That is to say, the energy resource control device 10 may set, as the parameters, a total value of the controllable amounts and a total value of the reference values for the plurality of facilities 5 included in the control target area 5A, or a total value of the controllable amounts and a total value of the reference values for the groups, or a total value of the controllable amounts and a total value of the reference values for the energy resources, using the parameter input screen G1.

### (6.2) Second Variation

In the embodiment described above, the energy resource control device 10 is configured to allow the display unit 13 to display the parameter input screen G1, the energy resource input screen G2, the result confirmation screen G3, the data download screen G4, the DR event result information screen G5, and the peak cut screen G6, but should not be construed as limiting.

The display controller 102 of the energy resource control device 10 may allow a display unit 13 of another device to display those screens. For example, the display controller 102 may allow a display unit 13 of an information terminal such as a smartphone or a tablet terminal to display those screens.

### (6.3) Third Variation

It is not necessary to allow the display unit 13 to display all of the parameter input screen G1, the energy resource input screen G2, the result confirmation screen G3, the data download screen G4, the DR event result information screen G5, and the peak cut screen G6.

For example, the energy resource control device 10 may be configured to allow the display unit 13 to display at least the energy resource input screen G2, of the parameter input screen G1, the energy resource input screen G2, the result confirmation screen G3, the data download screen G4, the DR event result information screen G5, and the peak cut screen G6.

Alternatively, the energy resource control device 10 may be configured to allow the display unit 13 to display at least the parameter input screen G1, of the parameter input screen G1, the energy resource input screen G2, the result confirmation screen G3, the data download screen G4, the DR event result information screen G5, and the peak cut screen G6.

### (Other Variations)

The embodiment described above is only an exemplary one of various embodiments of the present disclosure and should not be construed as limiting. The embodiment described above may be readily modified in various manners depending on a design choice or any other factor as long as the object of the present disclosure is achieved. The same function as that of the energy resource control system 1 may also be implemented as, for example, an energy resource control method, a computer program, or a non-transitory storage medium that stores the program thereon.

An energy resource control method of the energy resource control system 1, according to one aspect, is to be applied to the energy resource control system 1 configured to perform resource control for energy resources 20 to provide the power service. The energy resource control method includes an acquisition step, a display control step, and a generation step. The acquisition step includes acquiring the measuring data as the power information measured in the facility 5 according to the resource control. The display control step includes controlling a display unit (e.g., the display unit 13) to display data about the resource control. The generation step includes generating the control command for the control target energy resource that is a target of the resource control. The display control step further includes allowing the display unit 13 to display the energy resource input screen G2 for receiving: the input of the selection condition for the energy resources 20: and the input of the control target energy resource as the target of the resource control, of one or more energy resources 20 which satisfy the selection condition. The generation step including generating the control command based on the control target energy resource according to the input received on the energy resource input screen G2 and the measuring data acquired in the acquisition step.

An energy resource control method of the energy resource control system 1, according to one aspect, is to be applied to the energy resource control system 1 configured to perform resource control for energy resources 20 to provide the power service. The energy resource control method includes an acquisition step, a display control step, and a generation step. The acquisition step includes acquiring the measuring data as the power information measured in the facility 5 according to the resource control. The display control step includes controlling a display unit (e.g., the display unit 13) to display data about the resource control. The generation step includes generating the control command for the control target energy resource that is a target of the resource control. The display control step further including allowing the display unit 13 to display the parameter input screen G1 for receiving the input of the parameter relating to the power service. The generation step including generating the control command based on the parameter received on the parameter input screen G1, and the measuring data acquired in the acquisition step.

A program according to one aspect is a program designed to cause a computer system to function as the energy resource control system 1, or as the energy resource control method of the energy resource control system 1.

The energy resource control system 1 or the execution subject of the energy resource control method of the energy resource control system 1, according to the present disclosure, includes a computer system. The computer system may include a processor and a memory as principal hardware components thereof. The functions as the energy resource control system 1 or the execution subject of the energy resource control method of the energy resource control system 1, according to the present disclosure, may be performed by making the processor execute a program stored in the memory of the computer system. The program may be stored in advance in the memory of the computer system. Alternatively, the program may also be downloaded through a telecommunications line. Alternatively, the program may also be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation.

Some function of the energy resource control system 1 being aggregated together in a single housing is not an essential configuration for the energy resource control system 1. Alternatively, the constituent elements of the energy resource control system 1 may be distributed in multiple different housings. Optionally, at least some functions of the energy resource control system 1 may be implemented as, for example, a cloud computing system (cloud).

### (Recapitulation)

As described above, an energy resource control system (1) according to a first aspect is configured to perform resource control for energy resources to provide a power service. The energy resource control system (1) includes a data acquirer (101), a display controller (102), and a generator (103). The data acquirer (101) is configured to acquire measuring data as power information measured in a facility (5). The display controller (102) is configured to control a display unit (13) to display data about the resource control. The generator (103) is configured to generate a control command for a control target energy resource that is a target of the resource control. The display controller (102) is further configured to allow the display unit (13) to display an energy resource input screen (G2) for receiving: an input of a selection condition for the energy resources (20): and an input of setting, to the control target energy resource, at least one energy resource (20), which satisfies the selection condition, of the energy resources (20). The generator (103) is configured to generate the control command based on: the control target energy resource according to the input of setting, received on the energy resource input screen (G2); and the measuring data acquired by the data acquirer (101).

According to this configuration, the energy resource control system (1) can perform the resource control for the energy resources more accurately.

In an energy resource control system (1) according to a second aspect, which may be implemented in conjunction with the first aspect, the display controller (102) is further configured to allow the display unit (13) to display a parameter input screen (G1) for receiving an input of a parameter relating to the power service. The generator (103) is configured to generate the control command based on: the parameter received on the parameter input screen (G1); and the measuring data acquired by the data acquirer (101).

According to this configuration, the energy resource control system (1) can adjust the target value when performing the control according to the demand response. Therefore, the energy resource control system (1) can perform the resource control for the energy resources more accurately.

In an energy resource control system (1) according to a third aspect, which may be implemented in conjunction with the second aspect, the parameter includes at least one selected from the group consisting of a reference value, a controllable amount and a bid amount, the reference value being calculated from the measuring data acquired by the data acquirer (101).

According to this configuration, the energy resource control system (1) can set the at least one selected from the group consisting of the reference value, the controllable amount and the bid amount.

In an energy resource control system (1) according to a fourth aspect, which may be implemented in conjunction with the third aspect, when the parameter includes the reference value, the parameter input screen (G1) is provided to further receive an input of an offset value with respect to the parameter. The generator (103) is configured to set a result obtained by reflecting the offset value in the parameter to a new parameter, and generate the control command based on the new parameter.

According to this configuration, the energy resource control system (1) can set the reference value.

In an energy resource control system (1) according to a fifth aspect, which may be implemented in conjunction with any one of the first to fourth aspects, the display controller (102) is further configured to allow the display unit (13) to display a control result screen (e.g., the result confirmation screen G3 and the DR event result information screen G5) including: a control result obtained based on the control command; and the measuring data obtained by controlling based on the control command.

According to this configuration, the user (e.g., the operator u1) can know the result after the control according to the demand response. Therefore, the energy resource control system (1) can display the energy resource input screen (G2) again to receive the input of the control target energy resource and generate the control command. Accordingly, the energy resource control system (1) can more accurately perform the control according to the demand response.

In an energy resource control system (1) according to a sixth aspect, which may be implemented in conjunction with any one of the first to fifth aspects, the selection condition includes at least one selected from the group consisting of: a missing rate of the measuring data; a characteristic of the measuring data; an analysis result of the measuring data; a prediction result based on the measuring data; responsiveness of the control target energy resource with respect to the control command; an identifier of the facility; a characteristic of the facility; a type of the control target energy resource; an identifier of the control target energy resource; a state of the control target energy resource; and a characteristic of the control target energy resource.

According to this configuration, the energy resource control system (1) can specify the control target energy resource, using at least one of the missing rate of the measuring data, the responsiveness of the control target energy resource with respect to the control command, the type of the control target energy resource, and the identifier of the control target energy resource.

An energy resource control system (1) according to a seventh aspect, which may be implemented in conjunction with any one of the first to sixth aspects, further includes an outputter (104). The outputter (104) is configured to output, to the control target energy resource, the control command generated by the generator (103).

According to this configuration, the energy resource control system (1) can perform the resource control for the energy resources more accurately.

An energy resource control system (1) according to an eighth aspect is configured to perform resource control for energy resources to provide a power service. The energy resource control system (1) includes a data acquirer (101), a display controller (102), and a generator (103). The data acquirer (101) is configured to acquire measuring data as power information measured in a facility (5). The display controller (102) is configured to control a display unit (13) to display data about the resource control. The generator (103) is configured to generate a control command for a control target energy resource that is a target of the resource control. The display controller (102) is further configured to allow the display unit (13) to display a parameter input screen (G1) for receiving an input of a parameter relating to the power service. The generator (103) is configured to generate the control command based on: the parameter received on the parameter input screen (G1); and the measuring data acquired by the data acquirer (101).

According to this configuration, the energy resource control system (1) can perform the resource control for the energy resources more accurately.

An energy resource control method according to a ninth aspect is to be applied to an energy resource control system (1) configured to perform resource control for energy resources to provide a power service. The energy resource control method includes an acquisition step, a display control step, and a generation step. The acquisition step includes acquiring measuring data as power information measured in a facility (5). The display control step includes controlling a display unit (13) to display data about the resource control. The generation step includes generating a control command for a control target energy resource that is a target of the resource control. The display control step further includes allowing the display unit (13) to display an energy resource input screen (G2) for receiving: an input of a selection condition for the energy resources (20): and an input of setting, to the control target energy resource, at least one energy resource (20), which satisfies the selection condition, of the energy resources (20). The generation step includes generating the control command based on: the control target energy resource according to the input of setting, received on the energy resource input screen (G2); and the measuring data acquired in the acquisition step.

This energy resource control method can perform the resource control for the energy resources more accurately.

An energy resource control method according to a tenth aspect is to be applied to an energy resource control system (1) configured to perform resource control for energy resources to provide a power service. The energy resource control method includes an acquisition step, a display control step, and a generation step. The acquisition step includes acquiring measuring data as power information measured in a facility (5). The display control step includes controlling a display unit (13) to display data about the resource control. The generation step includes generating a control command for a control target energy resource that is a target of the resource control. The display control step further including allowing the display unit (13) to display a parameter input screen (G1) for receiving an input of a parameter relating to the power service. The generation step including generating the control command based on: the parameter received on the parameter input screen (G1); and the measuring data acquired in the acquisition step.

This energy resource control method can perform the resource control for the energy resources more accurately.

A program according to an eleventh aspect is designed to cause a computer system to perform the energy resource control method of the ninth or tenth aspect.

This program can perform the resource control for the energy resources more accurately.

### Reference Signs List

- 1: Energy Resource Control System
- 5: Facility
- 10: Energy Resource Control Device
- 20: Energy Resource
- 101: Data Acquirer
- 102: Display Controller
- 103: Generator
- 104: Outputter
- G1: Parameter Input Screen
- G2: Energy Resource Input Screen
- G3: Result Confirmation Screen

## Claims

1. An energy resource control system configured to perform resource control for energy resources to provide a power service, the energy resource control system comprising:
a data acquirer configured to acquire measuring data as power information measured in a facility;
a display controller configured to control a display unit to display data about the resource control; and
a generator configured to generate a control command for a control target energy resource that is a target of the resource control,
the display controller being further configured to allow the display unit to display an energy resource input screen for receiving:
an input of a selection condition for the energy resources: and
an input of setting, to the control target energy resource, at least one energy resource, which satisfies the selection condition, of the energy resources,
the generator being configured to generate the control command based on:
the control target energy resource according to the input of setting, received on the energy resource input screen; and
the measuring data acquired by the data acquirer.

2. The energy resource control system of claim 1, wherein
the display controller is further configured to allow the display unit to display a parameter input screen for receiving an input of a parameter relating to the power service, and
the generator is configured to generate the control command based on:
the parameter received on the parameter input screen; and
the measuring data acquired by the data acquirer.

3. The energy resource control system of claim 2, wherein
the parameter includes at least one selected from the group consisting of a reference value, a controllable amount and a bid amount, the reference value being calculated from the measuring data acquired by the data acquirer.

4. The energy resource control system of claim 3, wherein
when the parameter includes the reference value, the parameter input screen is provided to further receive an input of an offset value with respect to the parameter, and
the generator is configured to set a result obtained by reflecting the offset value in the parameter to a new parameter, and generate the control command based on the new parameter.

5. The energy resource control system of any one of claims 1 to 4, wherein
the display controller is further configured to allow the display unit to display a control result screen including:
a control result obtained based on the control command; and
the measuring data obtained by controlling based on the control command.

6. The energy resource control system of any one of claims 1 to 5, wherein
the selection condition includes at least one selected from the group consisting of:
a missing rate of the measuring data;
a characteristic of the measuring data;
an analysis result of the measuring data;
a prediction result based on the measuring data;
responsiveness of the control target energy resource with respect to the control command;
an identifier of the facility;
a characteristic of the facility;
a type of the control target energy resource;
an identifier of the control target energy resource;
a state of the control target energy resource; and
a characteristic of the control target energy resource.

7. The energy resource control system of any one of claims 1 to 6, further comprising an outputter configured to output, to the control target energy resource, the control command generated by the generator.

8. An energy resource control system configured to perform resource control for energy resources to provide a power service, the energy resource control system comprising:
a data acquirer configured to acquire measuring data as power information measured in a facility;
a display controller configured to control a display unit to display data about the resource control; and
a generator configured to generate a control command for a control target energy resource that is a target of the resource control,
the display controller being further configured to allow the display unit to display a parameter input screen for receiving an input of a parameter relating to the power service, and
the generator is configured to generate the control command based on:
the parameter received on the parameter input screen; and
the measuring data acquired by the data acquirer.

9. An energy resource control method to be applied to an energy resource control system configured to perform resource control for energy resources to provide a power service, the energy resource control method comprising:
an acquisition step including acquiring measuring data as power information measured in a facility;
a display control step including controlling a display unit to display data about the resource control; and
a generation step including generating a control command for a control target energy resource that is a target of the resource control,
the display control step further including allowing the display unit to display an energy resource input screen for receiving:
an input of a selection condition for the energy resources: and
an input of setting, to the control target energy resource, at least one energy resource, which satisfies the selection condition, of the energy resources,
the generation step including generating the control command based on:
the control target energy resource according to the input of setting, received on the energy resource input screen; and
the measuring data acquired in the acquisition step.

10. An energy resource control method to be applied to an energy resource control system configured to perform resource control for energy resources to provide a power service, the energy resource control method comprising:
an acquisition step including acquiring measuring data as power information measured in a facility;
a display control step including controlling a display unit to display data about the resource control; and
a generation step including generating a control command for a control target energy resource that is a target of the resource control,
the display control step further including allowing the display unit to display a parameter input screen for receiving an input of a parameter relating to the power service, and
the generation step including generating the control command based on:
the parameter received on the parameter input screen; and
the measuring data acquired in the acquisition step.

11. A program designed to cause a computer system to perform the energy resource control method of claim 9 or 10.
